# EUROPEAN PATENT APPLICATION

(11) **EP 3 034 377 A1**
(43) Date of publication of application: **22.06.2016**
(21) Application number: 14759953.4
(22) Date of filing: 22.02.2014
(51) Int. Cl.: B62B 3/10, B62B 3/12, B62B 3/14

(54) **TROLLEY FOR SHOPPING IN SHOPPING CENTRES**

(30) Priority: 04.03.2013 ES 201330306
(71) Applicant: Obradors Gómez, Ana, 28016 Madrid (ES)
(72) Inventor: Obradors Gómez, Ana, 28016 Madrid (ES)
(86) International application number: PCT/ES2014/070134
(87) International publication number: WO 2014/135725

(57) **Abstract**

Trolley for shopping in malls and shopping centers with a system of rods with safety for the bags and items transport.

## Description

The current invention refers to a trolley for shopping in Malls and Shopping Centers, it will be used to place the successive bags acquired in the Mall shops

### TECHNOLOGY AREA

The invention belongs to SECTION B PERFORMING OPERATIONS; TRANSPORTING, more precisely in transports referred to hand carts having more than one axis carrying transport wheels characterized by provisions for nesting or stacking e.g. shopping trolleys

### PRIOR ART

Nowadays in malls there are no means to transport purchases through this long spaces. It's really uncomfortable to have to walk long distances loaded with the purchases, coats,, bags and other accessories, as well as a danger for people with backache which can increase this problems because of the weight.

Patent document WO2012TR00052 20120307 , TR201104532 (A1), intends a cart for this same purpose that apparently does not have the same characteristics as the one proposed in this application. System to hang the shopping bags is to hang them at the sides of this truck which can be quite unstable and inadequate.

### BACKGROUND OF THE INVENTION

We are all aware of supermarkets and hypermarkets trolleys, they are equipped with wheels and a case opened by the top to deposit inside the objects that will then be paid in register. According to the **International classification:** B62B3/14 (2006.01).

But this type of trolley is not useful for shopping centers or malls, where you have to get inside the different stores with confined spaces and low mobility.

### INVENTION DESCRIPTION

The trolley is designed so customers do not have to be loaded all through the Mall. When arriving to a Mall the customer will be able to pick a trolley so as to leave all purchases on it without having to walk loaded all over. It will also be useful to carry our winter clothes really bothering when visiting the different stores and when walking up and down the long corridors. It also makes easier when it comes to pick up the mobile phone or caring for children who accompany us.

### DETAILED DESCRIPTION OF THE INVENTION

This trolley has a L shape frame provided with swivel wheels (adapted for conveyors) at the base; in the front part of the base there are rubber protectors so the trolley doesn't get damaged in the accumulation system. On the upper vertical area of the L shaped frame is the managing bar of the trolley equipped with a control system. This vertical area is separated by at least two horizontal axes from which arises three rods respectively, these rods function is to hold the bags of different sizes that they give you when you buy in the different stores of the shopping centers. These rods are fitted with a closing that prevents that bags can be extracted easily, which reverts in the safety of purchases (so as no one can take shopping with a simple gesture). The size of the trolley does not exceed in its frontal part 50 cm (long) and 120 cm high, which makes it very easy to use and slightly clogs in stores where customers amble along with baby buggy much bigger than the trolley. It may have or not a braking system controlled from the bar management of the trolley. The material for the manufacturing of the trolley may include any known material or to know where design is effective (aluminum, iron, PVC, and others).

### BRIEF DESCRIPTION OF THE DRAWINGS

Some drawings are accompanied to the better understanding of what is described in this report.

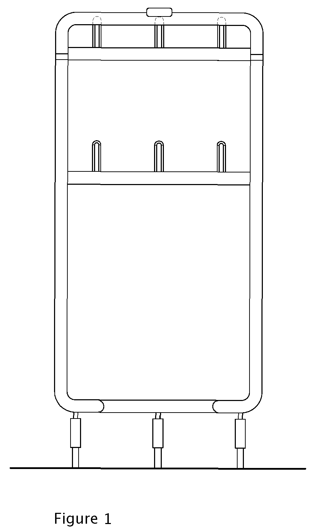

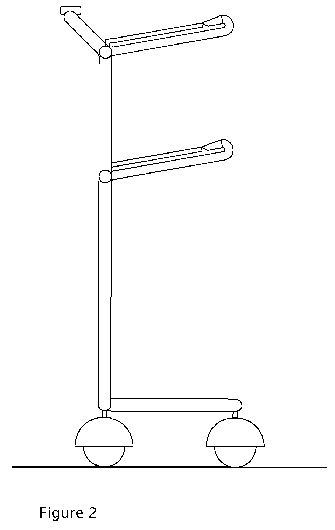

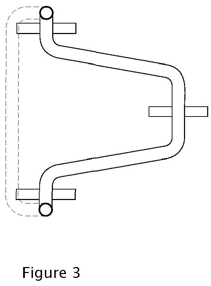

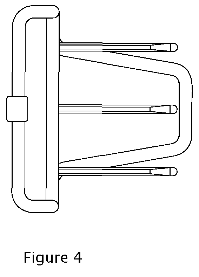

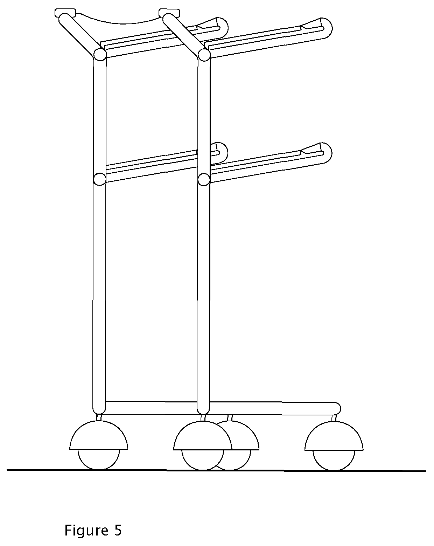

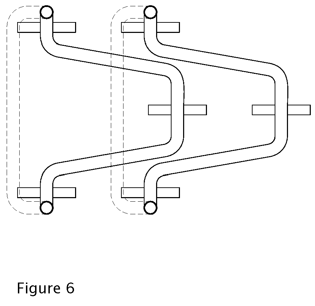

Figure 1 is the rear view of the car. Figure 2 is a side view of the same. Figure 3 is a view from the base of the cart without upper rods. Figure 4 is an overhead view devoid of wheels. Figure 5 is a side view of the accumulation system. Figure 6 floor view of the accumulation system view

### DETAILED EXPLANATION OF EXECUTION WAY

The trolley will be manufactured in iron with a mould designed of the prototype. The wheels will be added two in the back and one or two in the front. The wheels have to be swivel and adapted for conveyors. There should be added the control system on the trolley managing bar.

## Claims

1. Trolley for shopping in malls and shopping centers that includes an L shaped frame with at least 3 swivel wheels adapted for conveyors, **characterized by** the L shaped frame is heavier on its base and specially on its front part, it's also provided with a vertical area divided by at least two horizontal axes from which arises three rods respectively fitted with a closing for bags it also includes a managing bar of the trolley equipped with a control system on the upper vertical area.

2. Trolley for shopping in malls and shopping centers, as in claim 1, provided by four swivel wheels on the base, adapted for conveyors.

3. Trolley for shopping in malls and shopping centers, as in claim 1 or 2, divided by at least three horizontal axes from which arises three rods each.

4. Trolley for shopping in malls and shopping centers, according to any of the above claims with an improved rod system.

5. Trolley according to claims 1, 2 and 3 provided with a vertical security control system for purchases contained by a bar that displaces forward and backwards in a central rail that includes the central rods.
